# EUROPÄISCHE PATENTSCHRIFT

(11) **EP 1 200 853 B1**
(45) Veröffentlichungstag und Bekanntmachung des Hinweises auf die Patenterteilung: **12.03.2003**
(21) Anmeldenummer: 00943508.2
(22) Anmeldetag: 20.07.2000
(51) Int. Cl.: G01S 17/66

(54) **VERFAHREN UND ANORDNUNG ZUR BESTIMMUNG VON RÄUMLICHEN POSITIONEN UND ORIENTIERUNGEN**
METHOD AND DEVICE FOR DETERMINING SPATIAL POSITIONS AND ORIENTATIONS
PROCEDE ET DISPOSITIF DESTINES A LA DETERMINATION DE POSITIONS ET D'ORIENTATIONS SPATIALES

(30) Priorität: 28.07.1999 CH 139499
(43) Veröffentlichungstag der Anmeldung: 02.05.2002
(73) Patentinhaber: Leica Geosystems AG, 5035 Unterentfelden (CH)
(72) Erfinder: MARKENDORF, Albert, CH-5034 Suhr (CH); LOSER, Raimund, D-79713 Bad Säckingen (DE)
(74) Vertreter: Frei, Alexandra Sarah
(86) Internationale Anmeldenummer: CH0000396
(87) Internationale Veröffentlichungsnummer: WO01009642

(56) Entgegenhaltungen:
- DD-A- 295 229
- US-A- 4 707 129
- US-A- 4 714 339

## Beschreibung

Die Erfindung liegt auf dem Gebiete der Messtechnik und betrifft ein Verfahren und eine Anordnung gemäss den entsprechenden, unabhangigen Patentansprüchen. Verfahren und Anordnung dienen zur Bestimmung der räumlichen Position und Orientierung von Objekten, insbesondere von bewegten oder bewegbaren Objekten.

Es ist bekannt, die räumliche Position eines bewegten Reflektors mit einem Laserstrahl aus einer im wesentlichen stationären Quelle und mit einer auf den Reflektor einstellbaren und vermessbaren Richtung zu verfolgen und eine neue Position des Reflektors anhand einer erfassten Richtungsveränderung und einer interferometrisch bestimmten Abstandsveranderung zu bestimmen. Derartige Messmethoden werden beispielsweise verwendet, um Oberflächen auszumessen, über die ein Reflektor bewegt wird, oder um bewegte Objekte zu steuern, an denen ein Reflektor angeordnet ist. Es sind auch entsprechende, absolute Messverfahren bekannt. Die mit den genannten Verfahren vermessbaren Bewegungen werden dadurch eingeschränkt. dass der Reflektor üblicherweise eine beschränkte Frontfläche hat, auf die der Laserstrahl fallen muss, damit eine Reflexion gewährleistet ist. Das heisst nicht nur, dass sich zwischen Laser und Reflektor kein Hindernis befinden darf, sondern es heisst auch, dass die Frontfläche des Reflektors immer gegen den Laser gewandt sein muss.

Soll zusätzlich zur Position des Reflektors oder eines Objektes, an dem der Reflektor angeordnet ist, auch eine räumliche Orientierung des Reflektors oder Objekts bestimmt werden, werden gemäss dem Stande der Technik auf dem Objekt oder auf einem entsprechend einsetzbaren Werkzeug zusätzlich zum oben genannten Reflektor weitere Reflektoren oder Lichtpunkte angeordnet und wird mit beispielsweise einer digitalen Kamera, deren optische Achse an die Laserstrahl-Richtung angepasst ist, die Anordnung der zusätzlichen und illuminierten Reflektoren oder der Lichtpunkte abgebildet. Aus einem Vergleich der effektiven Anordnung der Reflektoren oder Lichtpunkte und dem registrierten Bilde dieser Anordnung können dann Parameter der räumlichen Orientierung des Objektes (z.B. Drehpositionen bezüglich orthogonalen Achsen) berechnet werden.

Zur Durchführung der oben genannten Verfahren werden Messsysteme mit einem Instrument, das Laser-Tracker genannt wird, und mit einem Reflektor verwendet, wobei das Messsystem gegebenenfalls auch ein Bildaufnahmegerät und eine Anordnung weiterer Reflektoren oder Lichtpunkte aufweisen kann. Eine derartige Anordnung ist beispielsweise beschrieben in der Publikation WO 97/14015 (Metronor).

Die wesentlichen Bestandteile des angewendeten Laser-Trackers sind ein Laser zur Erzeugung des Laserstrahls, eine einstellbare Spiegeleinrichtung zur Ausrichtung des Laserstrahles auf den Reflektor und zur Verfolgung eines bewegten Reflektors und ein Interferometer. Mit Laser-Trackern, kooperierende Reflektoren sind üblicherweise retroreflektierende Tripelprismen (Prisma mit Würfelecken-förmiger Spitze und beispielsweise runder Basis- oder Frontfläche, die senkrecht zur Symmetrieachse oder optischen Achse des Prismas steht) oder gegebenenfalls Tripelspiegel (bestehend aus drei rechtwinklig zusammengebauten Spiegeln, die eine hohle Würfelecke bilden). Derartige Reflektoren reflektieren ein einfallendes Parallelstrahlenbündel in sich und zwar unabhängig vom Einfallswinkel.

Es ist bekannt. dass im Gegensatz zum Tripelspiegel in einem Tripelprisma der Weg eines reflektierten Strahles von seinem Einfallswinkel in das Prisma abhängig ist. Dadurch ist für ein Tripelprisma nicht nur die interferometrisch wichtige optische Weglänge sondern auch der für die Winkelmessung wichtige Wegverlauf von diesem Einfallswinkel abhängig. Weil der Tripelspiegel aus mechanischen Gründen relativ gross sein muss und weil er leicht verschmutzt, wird das Tripelprisma üblicherweise trotz des genannten Nachteils vorgezogen, wobei Messfehler bedingt durch die oben genannten Abhängigkeiten vom Einfallswinkel dadurch vermieden werden, dass der Einfallswinkel des Laserstrahls auf die Basisfläche des Tripelprismas auf einen Bereich von maximal ca. 20° zur Senkrechten beschränkt wird, in welchem Bereich die genannten Abhängigkeiten fiir gängige Messungen vernachlässigbar sind. Eine derartige Einfallswinkelbeschrankung wird beispielsweise realisiert, indem die Frontfläche des Tripelprismas derart versenkt angeordnet wird, dass ein Strahl mit einem grosseren Einfallswinkel nicht mehr auf die Frontfläche trifft.

Die genannte Einfallswinkelbeschränkung verschärft die bereits weiter oben genannten Messbedingungen, denn der Laserstrahl muss für eine Messung nicht nur auf die Frontfläche des Reflektors fallen, sondern er muss in einem recht engen Winkelbereich auf diese Frontfläche fallen.

Um die genannten Beschränkungen insbesondere fiir interferometrische Distanzmessungen zu eliminieren, wird in der Publikation US-4707129 vorgeschlagen, den Reflektor nicht fest auf dem bewegten Objekt anzubringen, sondern ihn um zwei senkrecht aufeinander stehende Achsen angetrieben verschwenkbar anzuordnen und ihn für die Messungen auf den durch den Tracker erzeugten Laserstrahl immer derart auszurichten, dass der Laserstrahl parallel zur optischen Achse in den Reflektor fällt. Zur Steuerung der Reflektorausrichtung wird vorgeschlagen, die Spitze des als Reflektor eingesetzten Tripelspiegels derart auszugestalten, dass ein eigens dafür erzeugter Laserstrahl, der auf diesen Spitzenbereich gerichtet ist, nicht reflektiert wird sondern durch den Reflektor durchtritt und auf einen hinter dem Reflektor angeordneten Positionsdetektor (z.B. PSD: position sensitive diode) trifft.

In einem derart ausgerüsteten System existieren die oben genannten Anwendungsbeschränkungen nicht. Es kann aber nicht fur die Bestimmung der räumlichen Orientierung eines Objektes herangezogen werden und es ist mit einem erheblichen apparativen und steuerungstechnischen Aufwand verbunden.

Die Erfindung stellt sich nun die Aufgabe, ein Verfahren und eine Vorrichtung zur Bestimmung von Position und Orientierung von insbesondere bewegten oder bewegbaren Objekten mit Hilfe eines im wesentlichen stationären Laser-Trackers und eines am Objekt angeordneten Reflektors zu schaffen. Verfahren und Vorrichtung sollen einfach sein, sollen in verschiedensten Anwendungen einsetzbar sein und sollen die oben genannten Beschränkungen derartiger Bestimmungsmethoden möglichst mildern.

Diese Aufgabe wird gelöst durch das Verfahren und die Anordnung, wie sie in den entsprechenden, unabhängigen Patentansprüchen definiert sind.

Das.erfindungsgemässe Verfahren basiert auf einem Reflektor, der gegenüber dem Objekt, auf dem er angeordnet ist, eine unveränderbare, bekannte Position und Orientierung oder eine veränderbare und durch Messung erfassbare Orientierung und gegebenenfalls Position hat, derart, dass aus der Reflektor-Position und aus der Reflektor-Orientierung nicht nur auf die Objekt-Position sondern auch auf die Objekt-Orientierung geschlossen werden kann. Das Verfahren besteht im wesentlichen darin, zusätzlich zur Vermessung der Richtung des Laserstrahles und der interferometrischen Messung der Weglänge des Laserstrahls auch den Einfallswinkel des Laserstrahles in den Reflektor (Orientierung des Reflektors relativ zum Laserstrahl) und/oder der Reflektor-Orientierung relativ zum Objekt zu vermessen und diese Messdaten zusammen mit den Messdaten für die Laserstrahl-Richtung und den interferometrisch bestimmten Messdaten zur Berechnung der gesuchten räumlichen Position und Orientierung des Objektes zu verwenden.

Für die Bestimmung der Objekt-Orientierung ergeben sich im wesentlichen die drei folgenden Varianten:
- Der Reflektor ist mit einer unveränderbaren Orientierung am Objekt montiert; der Einfallswinkel des Laserstrahles in den Reflektor variiert und wird durch Messung erfasst; für die Berechnung der Objekt-Orientierung wird zusätzlich zur erfassten Richtung des Laserstrahles der erfasste Einfallswinkel herangezogen.
- Der Reflektor ist mit einer veränderbaren Orientierung am Objekt montiert, wobei diese Orientierung durch Messung erfasst wird; der Einfallswinkel des Laserstrahles in den Reflektor ist variiert und wird durch Messung erfasst; für die Berechnung der Objekt-Orientierung werden zusätzlich zur erfassten Richtung des Laserstrahles die erfasste Reflektor-Orientierung und der erfasste Einfallswinkel herangezogen.
- Der Reflektor ist mit einer veränderbaren Orientierung am Objekt montiert und wird über eine entsprechende Regelschlaufe automatisch immer so eingestellt, dass der Laserstrahl senkrecht zur Frontfläche (Einfallswinkel gleich 0°) in den Reflektor fällt, wobei die Reflektor-Orientierung durch Messung erfasst wird; für die Berechnung der Objekt-Orientierung wird zusätzlich zur erfassten Richtung des Laserstrahles die erfasste Reflektor-Orientierung herangezogen.

Die aus der Messung des Einfallswinkels resultierenden Messdaten werden vorteilhafterweise auch herangezogen, um bei Verwendung eines Tripelprismas als Reflektor die interferometrische Distanzmessungen und/oder die Winkelmessungen zur Bestimmung der Laserstrahl-Richtung entsprechend zu korrigieren.

Die Anordnung zur Durchführung des erfindungsgemässen Verfahrens weist einen Laser-Tracker mit Mitteln zur Messung der Weglänge des Laserstrahles (Interferometer), einen am Objekt montierten Reflektor mit einer relativ zum Objekt unveränderbaren, bekannten Position, eine Rechnereinheit und Mittel zur Übertragung von Messdaten vom Laser-Tracker zur Rechnereinheit auf. Dabei ist der Reflektor derart am Objekt montiert, dass seine Orientierung relativ zum Objekt entweder unveränderbar und bekannt oder veränderbar und durch Messung erfassbar ist. Ferner weist die Anordnung Mittel zur Messung der Reflektor-Orientierung relativ zu einem in den Reflektor fallenden Laserstrahl (Einfallswinkel) und/oder Mittel zur Messung der Reflektor-Orientierung relativ zum Objekt sowie Mittel zur Übermittlung der . entsprechenden Messdaten an die Rechnereinheit auf.

Für die Vermessung des Einfallswinkels weist ein als Reflektor eingesetztes Tripelprisma anstelle einer Spitze eine Durchtrittsfläche auf, die im wesentlichen parallel zu seiner Basisfläche also senkrecht zur optischen Achse ausgerichtet ist und durch die ein zentraler Teil des auf den Reflektor fallenden Laserstrahles das Prisma unreflektiert verlässt. An einem als Reflektor verwendeten Tripelspiegel ist an der Spitze eine entsprechende Öffnung vorgesehen. Hinter dem Reflektor ist ein Positionssensor derart angeordnet, dass der den Reflektor durchdringende Teilstrahl darauf trifft und die Position des durch den Teilstrahl auf den Sensor geworfenen Lichtflecks direkt abhängig ist von der Einfallsrichtung des Laserstahles in den Reflektor. Der Positionssensor ist beispielsweise in einer Ebene senkrecht zur optischen Achse des Reflektors angeordnet und ist beispielsweise eine Positions-senitive Diode (PSD) oder ein CCD-Sensor (charge coupled device), wie er in einer digitalen Kamera zur Anwendung kommt.

Aus der Detektion des durch den Reflektor durchtretenden Teilstrahls mit dem Positionssensor können Drehungen des Reflektors um zwei Achsen senkrecht zu seiner optischen Achse gemessen werden. Nicht detektierbar ist eine Rotation um die optische Achse.

Für eine veranderbare Orientierung des Reflektors relativ zum Objekt wird der Reflektor um zwei Achsen (parallel zu seiner Frontfläche) drehbar montiert, wie dies beispielsweise in der bereits eingangs erwähnten Publikation US-4707129 beschrieben ist. Zusätzlich sind in an sich bekannter Weise beispielsweise Winkelsensoren vorzusehen, mit denen die Verdrehungen des Reflektors relativ zu den beiden Achsen messbar sind.

Das erfindungsgemasse Verfahren und beispielhafte Ausführungsformen der Vorrichtung zur Durchführung des Verfahrens werden anhand der folgenden Figuren im Detail beschrieben. Dabei zeigen.
- **Figur 1**: ein Schema einer erfindungsgemässen Anordnung zur Illustration des erfindungsgemässen Verfahrens;
- **Figuren 2 und 3**: das Prinzip der Messung des Einfallswinkels eines Laserstrahls in einen Retroreflektor (Figur 2: Ansicht quer zur optischen Achse des Re-flektors; Figur 3: Ansicht parallel zur optischen Achse des Reflektors);
- **Figuren 4 bis 6**: Schemas von drei Ausführungsformen der erfindungsgemässen Vorrichtung zur Durchführung der drei oben genannten Ausführungsformen des erfindungsgemässen Verfahrens.

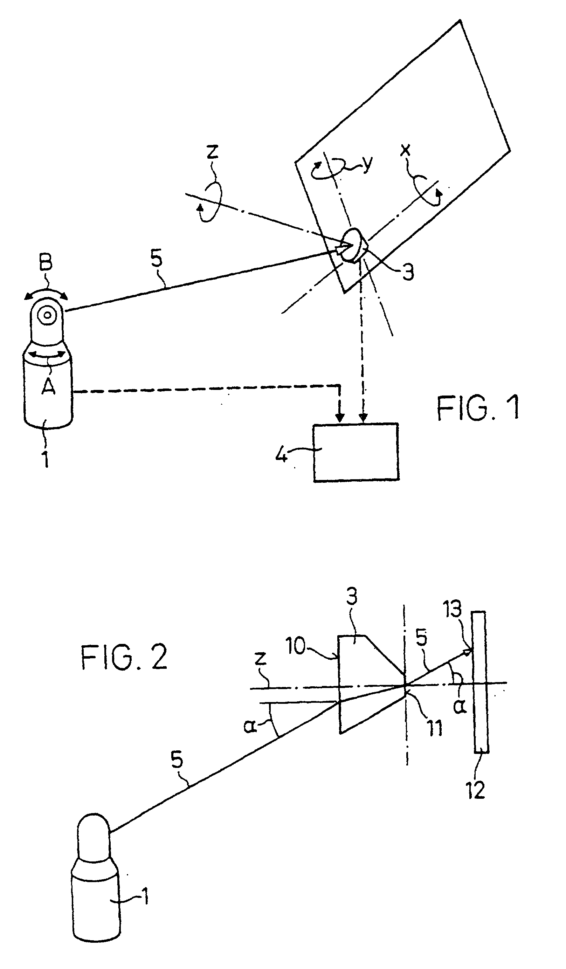

**Figur 1** zeigt sehr schematisch eine Anordnung zur Durchführung des erfindungsgemässen Verfahrens. Diese Anordnung weist einen Laser-Tracker 1, einen auf einem Objekt 2 angeordneten Reflektor 3 und eine Rechnereinheit 4 auf. Der Laser-Tracker sendet einen Laserstrahl 5 in einer einstellbaren Richtung (Doppelpfeile A und B) aus und ist ausgerüstet für eine Winkelmessung zur Vermessung der Richtung des Laserstrahles 5 und zur interferometrischen Messung der Weglänge des Laserstrahles 5 vom Tracker 1 zum Reflektor 3 und zurück, was im wesentlichen einer Messung der Distanz oder Distanzveranderung zwischen Tracker 1 und Reflektor 3 entspricht.

Der Reflektor 3 ist ein Tripelprisma oder Tripelspiegel mit einer Position und Orientierung relativ zum Objekt 2, die unveranderbar und bekannt oder veränderbar und durch Messung erfassbar ist.

Es ist aus der Figur 1 ersichtlich, dass mit der Richtungs- und Distanzmessung des Laser-Träckers lediglich die Position des Reflektors, also die Position eines einzigen Punktes des Objektes bestimmbar ist, dass aber für die Bestimmung seiner raumlichen Orientierung (z.B. Drehpositionen relativ zu den Achsen x, y, z) weitere Messungen notwendig sind. Erfindungsgemass wird nun zusatzlich zur Richtung des Laserstrahles 5 und der Distanz zwischen Tracker 1 und Reflektor 3 auch die Orientierung des Reflektors 3 relativ zum Laserstrahl 5 (Einfallswinkel) und/oder die Orientierung des Reflektors 3 relativ zum Objekt 2 gemessen.

Die durch den Laser-Tracker (inkl. Interferometer) ermittelten Messdaten und die aus den Vermessungen der Reflektor-Orientierung ermittelten Messdaten werden der Rechnereinheit 4 zugeführt und für die Berechnung von Position und Orientierung des Objektes 2 verwendet und gegebenenfalls auch für eine Korrektur der durch den Laser-Tracker 1 erzeugten Messdaten.

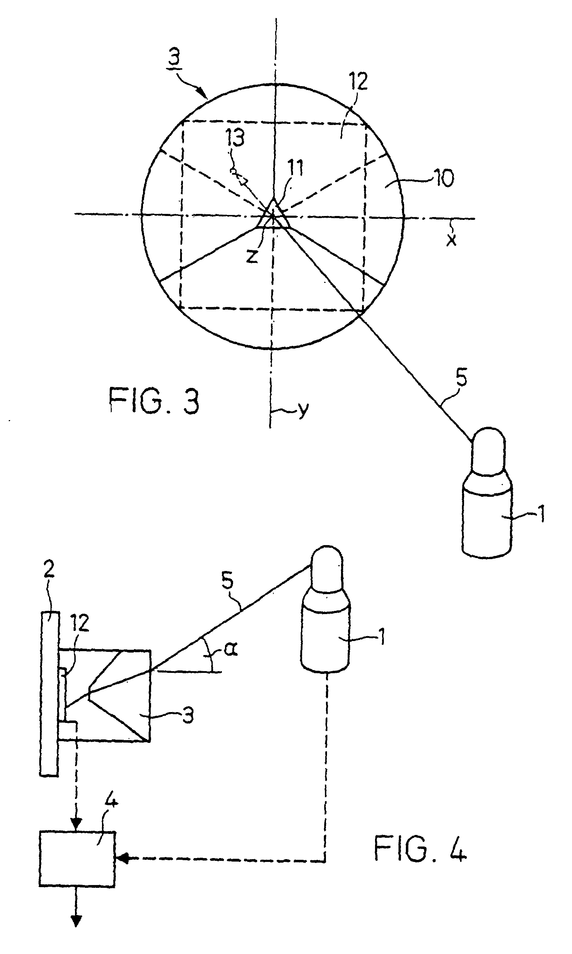

**Figuren 2 und 3** zeigen das Prinzip der Messung der Reflektor-Orientierung relativ zum Laserstrahl 5 bzw. des Einfallswinkels α des Laserstrahles in den Reflektor. Die Figuren zeigen einen Reflektor 3, einen mit nicht dargestellten Mitteln mit dem Reflektor 3 starr verbundenen Positionsdetektor 12 und einen Laserstrahl 5, von dem ein Teil durch den Reflektor 3 auf den Positionsdetektor 12 fällt. In Figur 2 ist die Sichtrichtung quer zur optischen Achse z des Reflektors 3, in Figur 3 parallel dazu.

Der Reflektor 3 ist beispielsweise ein Tripelprisma mit einer runden Basis- oder Frontfläche 10 und einer optischen Achse z, die die Höhenlinie des Prismas darstellt. Anstelle der Spitze weist das Tripelprisma eine Durchtrittsfäche 11 auf, die parallel zur Frontfläche 10 angeordnet ist und die derart bemessen ist, dass sie einen Teil des Laserstrahles 5 durch den Reflektor 3 durchtreten lässt.

Die peripheren Anteile des Laserstrahles 5 werden in nicht dargestellter Weise parallel reflektiert. Der unreflektierte, zentrale Teil des Strahles tritt durch die Durchtrittsfläche 11 aus dem Reflektor 3 aus und trifft auf den Positionsdetektor 12, der eine beispielsweise senkrecht zur optischen Achse z angeordnete lichtempfindliche Fläche aufweist und ein der Position eines Lichtflecks 13 auf dieser Fläche entsprechendes Messsignal erzeugt. Dabei entspricht die Position des durch den Teilstrahl erzeugten Lichtflecks 13 dem Einfallswinkel α des Teilstrahles auf die Frontfläche 10 des Reflektors 3

Bei Verwendung eines fiir derartige Anwendungen üblichen Laserstrahles mit einem Durchmesser im Bereiche von 6 bis 8 mm werden mit einer Durchtrittsfläche 11 (an Tripelprisma) oder Durchtrittsöffnung (an Tripelspiegel) mit einem Durchmesser im Bereiche von 0,3mm gute Resultate erreicht.

**Figur 4** illustriert in wiederum sehr schematischer Weise diejenige Ausführungsform des erfindungsgemässen Verfahrens, in der der Reflektor 3 und der Positionsdetektor 12 fest, das heisst insbesondere mit unveränderbarer Orientierung relativ zum Objekt 2 auf diesem montiert sind. Die Position und räumliche Orientierung des Objekts 2 werden berechnet anhand der Messdaten der Tracker-internen Winkelmessungen für die Bestimmung der Richtung des Laserstrahles 5 und der Messdaten des Interferometers sowie der Messdaten, die durch den hinter dem Reflektor 3 angeordneten Positionsdetektor 12 erzeugt werden, was durch entsprechende, gestrichelt dargestellte Datenleitungen zur Rechnereinheit 4 dargestellt ist. Aus der Laserstrahl-Richtung und dem Einfallswinkel α kann direkt auf die räumliche Orientierung des Reflektors 3 und des Objektes 2 geschlossen werden.

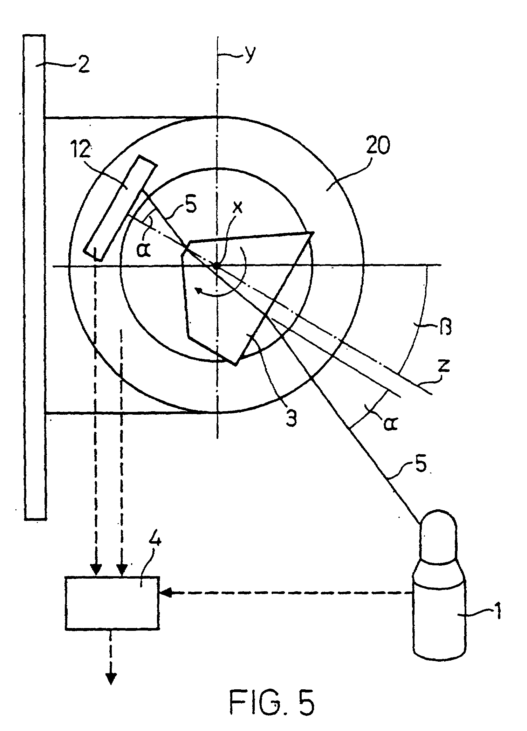

**Figur 5** illustriert diejenige Ausführungsform des erfindungsgemässen Verfahrens, in der der Reflektor 3 mit dem Positionsdetektor 12 eine relativ zum Objekt 2 verstellbare Orientierung hat, also beispielsweise um mindestens eine Achse x, die senkrecht zur optischen Achse z des Reflektors ausgerichtet ist, drehbar ist. Dabei wird ein Drehwinkel β um diese Achse x mit Hilfe eines Winkelgebers 20 erfasst. Die durch den Winkelgeber 20 und durch den Positionssensor 12 erzeugten Messdaten werden für die Berechnung der Position und Orientierung des Objekts 2 an die Rechnereinheit 4 übermittelt, wie dies durch gestichelt dargestellte Datenleitungen in der Figur angedeutet ist.

Die Drehung um die x-Achse kann beispielsweise eine Handeinstellung des Reflektors 3 sein; die den Reflektor 3 ungefahr auf den Laserstrahl 5 ausrichtet. Der für die Berechnung der räumlichen Orientierung des Objektes 2 relevante Winkel ist die Summe aus dem Einfallswinkel α und dem Orientierungswinkel β.

In derselben Weise, wie dies für eine Orientierungsveränderung durch Drehung um eine Achse x dargestellt ist, ist auch eine weitere Verstellbarkeit des Reflektors 3 zusammen mit dem Positionssensor 12 durch Drehung um eine rechtwinklig zur x-Achse ausgerichtete y-Achse denkbar. Dabei ist es vorteilhaft aber nicht zwingend, dass die beiden Achsen x und y die z-Achse schneiden.

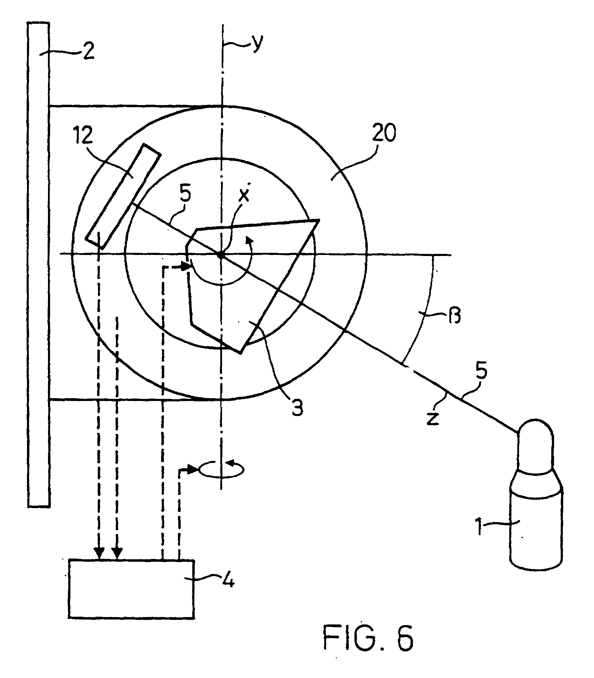

**Figur 6** zeigt diejenige Ausführungsform, in der der Reflektor 3 und der Positionssensor 12 relativ zum Objekt 2 eine veränderbare, beispielsweise um die Achsen x und y drehbare Orientierung hat. Für die Erfassung des Orientierungswinkels β sind entsprechende Winkelgeber 20 (nur einer dargestellt) vorgesehen. Die Einstellung erfolgt über einen Regelkreis, der beispielsweise in der Rechnereinheit 4 implementiert ist und für den das Messsignal des Positionssensors 12 als Messglied und in der Figur nicht dargestellte Antriebe für die Drehung des Reflektors als Stellglieder dienen. Der Regelkreis ist derart ausgestaltet, dass der Reflektor 3 immer derart ausgerichtet wird, dass der Laserstrahl auf der optischen Achse z des Reflektors 3 verläuft. Für die Berechnung der Position und Orientierung des Objektes 2 werden zusätzlich zu den Messdaten bezüglich Richtung und Weglänge des Laserstrahles 5 auch die durch die Winkelgeber 20 erzeugten Messdaten bezüglich Reflektor-Orientierung verwendet. wie dies durch entsprechende Datenleitungen zur Rechnereinheit 4 dargestellt ist.

Es ist auch möglich, Mischformen der in den Figuren 4 bis 6 dargestellten Ausführungsformen des erfindungsgemässen Verfahrens zu verwenden.

Damit mit Hilfe des im erfindungsgemässen Verfahren gemessenen Einfallswinkel α des Laserstrahles in den Reflektor die interferometrische Messung und die Winkelmessung zur Bestimmung der Laserstrahl-Richtung korrigiert werden können, sind der Rechnereinheit 4 entsprechende Resultate von Eichmessungen oder theoretisch erarbeitete Korrekturfunktionen zur Verfügung zu stellen. Die Abhängigkeit der Messresultate vom Einfallswinkel α ist bedingt durch die höhere optische Dichte des Tripelprismas und durch die damit in Zusammenhang stehende Brechung des Laserstrahles beim Eintreten in das Prisma und beim Austreten. Für die interferometrische Messung ergibt sich im wesentlichen ein additiver Korrekturfaktor, für die Winkelmessung eine entfernungsunabhängige Korrektur lateral zum Laserstrahl.

Obschon das erfindungsgemässe Verfahren insbesondere für die Bestimmung von Position und Orientierung von Objekten vorteilhaft ist, kann es selbstverständlich auch zur Bestimmung der Position von Punkten verwendet werden, wobei dann die Messdaten des Positionsdetektors nur zur Korrektur der interferometrischen Messung und der Winkelmessung zur Bestimmung der Laserstrahl-Richtung herangezogen werden.

## Patentansprüche

1. Verfahren zur Bestimmung der Position und der räumlichen Orientierung eines Objekts (2), insbesondere eines bewegten Objektes (2), mit Hilfe eines Laserstrahls (5) aus einer im wesentlichen stationären Quelle und mit einer einstellbaren Richtung und mit Hilfe eines am Objekt (2) angeordneten und einen einfallenden Laserstrahl (5) unabhängig vom Einfallswinkel parallel reflektierenden Reflektors (3), wobei der Laserstrahl (5) auf den Reflektor (3) ausgerichtet wird und den Reflektor (3) während einer Bewegung des Objektes (2) durch automatische Nachstellung der Laserstrahlrichtung verfolgt, wobei Messdaten bezüglich der Weglänge des reflektierten Laserstrahles (5) und bezüglich der Richtung des Laserstrahles (5) erzeugt werden und wobei die Position des Reflektors (3) und des Objektes (2) aus diesen Messdaten berechnet wird, **dadurch gekennzeichnet, dass** zusätzliche Messdaten bezüglich des Einfallswinkels (α) des Laserstrahls (5) in den Reflektor (3) erzeugt werden und dass die Position und räumliche Orientierung des Objektes (2) anhand der Messdaten bezüglich der Richtung und Weglänge des Laserstrahles (5) und anhand der zusätzlichen Messdaten berechnet werden.

2. Verfahren nach Anspruch 1, **dadurch gekennzeichnet, dass** die zusätzlichen Messdaten bezüglich des Einfallswinkels (α) des Laserstrahles (5) in den Reflektor (3) durch einen Positionssensor (12) erzeugt werden, welcher Positionssensor (12) relativ zum Reflektor (3) stationär derart angeordnet ist, dass ein unreflektiert durch eine Austrittsfläche (11) oder Austrittsöffnung des Reflektors (3) austretender zentraler Teil des Laserstrahles (5) auf den Positionssensor trifft und darauf ein Bild erzeugt, dessen Position mit dem Einfallswinkel (α) korreliert ist.

3. Verfahren nach einem der Ansprüche 1 oder 2, **dadurch gekennzeichnet, dass** der Reflektor (3) relativ zum Objekt stationär angeordnet ist

4. Verfahren nach einem der Ansprüche 1 oder 2, **dadurch gekennzeichnet, dass** der Reflektor (3) relativ zum Objekt (2) eine einstellbare Orientierung hat und dass zusätzliche Messdaten bezüglich der Reflektor-Orientierung erzeugt werden.

5. Verfahren nach Anspruch 4, **dadurch gekennzeichnet, dass** der Reflektor (3) relativ zum Objekt (2) um mindestens eine Achse (x, y) senkrecht zu seiner optischen Achse (z) drehbar am Objekt (2) angeordnet ist und dass zusätzliche Messdaten bezüglich der Reflektor-Orientierung relativ zum Objekt (2) enteugt werden, indem mindestens ein Verdrehwinkel (β) des Reflektors um diese mindestens eine Achse (x, y) gemessen wird.

6. Verfahren nach einem der Ansprüche 4 oder 5, **dadurch gekennzeichnet, dass** der Reflektor durch Einstellung seiner Orientierung relativ zum Objekt (2) grob auf den Laserstrahl (5) ausgerichtet wind und dass die Position und räumliche Orientierung des Objektes (2) anhand der Messdaten bezüglich der Richtung und der Weglänge des Laserstrahles (5) und anhand der zusätzlichen Messdaten sowohl bezüglich des Einfallswinkels (α) als auch bezüglich der Reflektor-Orientierung relativ zum Objekt (2) berechnet wird.

7. Verfahren nach einem der Ansprüche 1 bis 6, **dadurch gekennzeichnet, dass** die Messdaten bezüglich der Weglänge des Laserstrahles (5) durch eine interferometrische Messung erzeugt werden und dass die Messdaten bezüglich der Richtung des Laserstrahles (5) durch Winkelmessung erzeugt werden.

8. Verfahren nach einem der Ansprüche 1 bis 7, **dadurch gekennzeichnet, dass** Messfehler, die durch eine Abhängigkeit der Weglänge und/oder der Richtung des Laserstrahles (5) vom Einfallswinkel (α) bedingt sind, anhand der zusätzlichen Messdaten bezüglich des Einfallswinkels (α) korrigiert werden.

9. Anordnung zur Durchführung des Verfahrens nach Anspruch 3, welche Anordnung einen im wesentlichen stationären Laser-Tracker (I) mit einem Laser, mit Mitteln zur gesteuerten Ausrichtung eines durch den Laser erzeugten Laserstrahles (5), mit Mitteln zur Erzeugung von Messdaten bezüglich der Weglänge des reflektierten Laserstrahles (5) und Mitteln zur Erzeugung von Messdaten bezüglich der Richtung des Laserstrahles (5) sowie einen am Objekt (2) angeordneten Reflektor (3), der den Laserstrahl (5) des Laser-Trackers (1) parallel reflektiert, aufweist, **dadurch gekennzeichnet, dass** der Reflektor (3) mit einer unveränderbaren Orientierung relativ zum Objekt an diesem angeordnet ist und dass die. Anordnung zusätzlich Mittel zur Erzeugung von zusätzlichen Messdaten bezüglich des Einfallswinkels (α) des Laserstrahles (5) auf den Reflektor (3) und Mittel zur Berechnung der Position und räumlichen Orientierung des Objekts (2) anhand der Messdaten bezüglich der Richtung und der Weglänge des Laserstrahles (5) und anhand der zusätzlichen Messdaten bezüglich des Einfallwinkels (α) aufweist.

10. Anordnung zu Durchführung des Verfahrens nach Anspruch 6, weche Anordnung einen im wesentlichen stationären Laser-Tracker (1) mit einem Laser, mit Mitteln zur gesteuerten Ausrichtung eines durch den Laser erzeugten Laserstrahles (5), mit Mitteln zur Erzeugung von Messdaten bezüglich der Weglänge des reflektierten Laserstrahles (5) und Mitteln zur Erzeugung von Messdaten bezüglich der Richtung des Laserstrahles (5) sowie einen am Objekt (2) angeordneten Reflektor (3), der den Laserstrahl (5) des Laser-Trackers (1) parallel reflektiert; aufweist, **dadurch gekennzeichnet, dass** der Reflektor (3) mit einer einstellbaren Orientierung relativ zum Objekt (2) an diesem angeordner ist und dass die Anordnung zusätzlich Mittel zur Erzeugung von zusätzlichen Messdaten bezüglich des Einfallswinkels (α) des Laserstrahles auf den Reflektor (3), Mittel zur Erzeugung von zusätzlichen Messdaten bezüglich der einstellbaren Orientierung des Reflektors (3) relativ zum Objekt (2) und Mittel zur Berechnung der Position und räumlichen Orientierung des Objekts (2) anhand der Messdaten bezüglich der Richtung des Laserstrahles (5) und anhand der zusätzlichen Messdaten aufweist.

11. Anordnung nach einem der Ansprüche 9 oder 10, **dadurch gekennzeichnet, dass** der Reflektor (3) ein Tripelprisma mit einer Austrittsfläche (11) oder ein Tripelspiegel mit einer Austrittsöffnung ist und dass zur Messung des Einfallswinkels (α) und zur Erzeugung entsprechender Messdaten ein relativ zum Reflektor stationär angeordneter Positionsdetektor (12) vorgeschen ist.

12. Anordnung nach Anspruch 10 oder 11, **dadurch gekennzeichnet dass** zur Messung der Reflektor-Orientierung relativ zum Objekt (2) und zur Erzeugung entsprechender Messdaten Winkelgeber (20) vorgesehen sind.

13. Anordnung nach einem der Ansprüche 9 bis 12, **dadurch gekennzeichnet, dass** sie ferner Mittel zur Korrektur der Messdaten bezüglich der Richtung des Laserstrahles (5) und/oder der Weglänge des Laserstrahles (5) anhand der Messdaten bezüglich des Einfallwinkels (α) des Laserstrahles (5) in den Reflektor (3) aufweist.

## Claims

1. A method for determining the position and the spatial orientation of an object (2), in particular of a moved object (2) using a laser beam (5) of an essentially stationary source and with an adjustable direction, and further using a reflector (3) arranged on the object and reflecting parallelly an incident laser beam (5) independently of the angle of incidence, wherein the laser beam (5) is directed onto the reflector (3) and follows the reflector (3) during movement of the object (2) by automatic readjustment of the laser beam direction, wherein measurement data with respect to the path length of the reflected laser beam (5) and with respect to the direction of the laser beam (5) is produced and wherein the position of the reflector (3) and of the object (2) is computed from this measurement data, **characterized in that** additional measurement data with respect to the angle of incidence (α) of the laser beam (5) into the reflector (3) are produced and that the position and spatial orientation of the object (2) is computed by way of the measurement data with respect to the direction and path length of the laser beam (5) and by way of the additional measurement data.

2. A method according to claim 1, **characterized in that** the additional measurement data with respect to the angle of incidence (α) of the laser beam (5) into the reflector (3) is produced by a position sensor (12), said position sensor (12) being stationarily arranged relative to the reflector (3) in a manner such that an unreflected central part of the laser beam (5) passes through a pass-through surface (11) or pass through opening of the reflector (3) and impinges onto the position sensor and thereupon produces an image whose position is correlated to the angle of incidence (α).

3. A method according to one of claims 1 or 2, **characterized in that** the reflector (3) is stationarily arranged relative to the object.

4. A method according to one of claims 1 or 2, **characterized in that** the reflector (3) has an adjustable orientation relative to the object (2) and that additional measurement data with respect to the reflector orientation is produced.

5. A method according to claim 4, **characterized in that** the reflector (3) is arranged rotatable relative to the object (2) about at least one axis (x, y) perpendicular to its optical axis (z), on the object and that additional measurement data with respect to the reflector orientation relative to the object (2) is produced by measuring at least one rotational angle (β) of the reflector about said at least one axis (x, y).

6. A method according to one of claims 4 or 5, **characterized in that** the reflector is coursely aligned with the laser beam (5) by adjusting its orientation relative to the object and that the position and spatial orientation of the object (2) is computed by way of measurement data with respect to the direction and the path length of the laser beam (5) and by way of the additional measurement data with respect to the angle of incidence (α) as well as with respect to the reflector orientation relative to the object (2).

7. A method according to one of the claims 1 to 6, **characterized in that** the measurement data with respect to the path length of the laser beam (5) is produced by interferometry and that the measurement data with respect to the direction of the laser beam is produced by angle measurement.

8. A method according to one of claims 1 to 7, **characterized in that** measuring errors caused by a dependency of the path length and/or the direction of the laser beam (5) on the angle of incidence (α) are corrected using the additional measurement data with respect to the angle of incidence (α.)

9. An arrangement for carrying out the method according to claim 3, said arrangement comprising an essentially stationary laser-tracker (1) with a laser, with means for the controlled alignment of a laser beam (5) produced by the laser, with means for producing measurement data with respect to the path length of the reflected laser beam (5) and means for producing measurement data with respect to the direction of the laser beam (5), and further comprising a reflector (3) arranged on an object (2) and parallelly reflecting the laser beam (5) of the laser-tracker (1), **characterized in that** the reflector (3) is arranged with an non-adjustable orientation relative to the object and that the arrangement additionally comprises means for producing additional measurement data with respect to the angle of incidence (α) of the laser beam (5) onto the reflector (3) and means for computing the position and spatial orientation of the object (2) by way of the measurement data with respect to the direction and path length of the laser beam (5) and by way of the additional measurement data with respect to the angle of incidence (α).

10. An arrangement for carrying out the method according to claim 6, said arrangement comprising an essentially stationary laser-tracker (1) with a laser, with means for the controlled alignment of a laser beam (5) produced by the laser, with means for producing measurement data with respect to the path length of the reflected laser beam (5) and means for producing measurement data with respect to the direction of the laser beam (5), and further comprising a reflector (3) arranged on an object (2) parallelly reflecting the laser beam (5) of the laser-tracker (1), **characterized in that** the reflector (3) is arranged with an adjustable orientation relative to the object (2) and that the arrangement additionally comprises means for producing additional measurement data with respect to the angle of incidence (α) of the laser beam (5) onto the reflector (3), means for producing additional measurement data with respect to the adjustable orientation of the reflector (3) relative to the object (2) and means for computing the position and spatial orientation of the object (2) by way of the measurement data with respect to the laser beam (5) and by way of the additional measurement data.

11. An arrangement according to one of claims 9 or 10, **characterized in that** the reflector (3) is a triple prism with a pass-through surface (11) or a triple mirror with a pass-through opening and that for measuring the angle of incidence (α) and for producing corresponding measurement data, a position detector (20) arranged stationarily relative to the reflector is provided.

12. An arrangement according to claim 10 or 11, **characterized in that** for measuring the reflector orientation relative to the object (2) and for producing corresponding measurement data, angle transmitters (20) are provided.

13. An arrangement according to one of claims 9 to 12, **characterized in that** it further comprises means for correcting the measurement data with respect to the direction of the laser beam (5) and/or the path length of the laser beam (5) by way of measurement data with respect to the angle of incidence (α) of the laser beam (5) into the reflector (3).

## Revendications

1. Procédé pour la détermination de la position et de l'orientation spatiale d'un objet (2), notamment d'un objet (2) en mouvement, à l'aide d'un faisceau laser (5) issu d'une source sensiblement stationnaire et ayant une orientation réglable, et à l'aide d'un réflecteur (3) réfléchissant parallèlement un faisceau laser (5) qui le touche quel que soit l'angle d'incidence, le faisceau laser (5) étant orienté vers le réflecteur (3) et le réflecteur suivant la direction du faisceau laser par un ajustement automatique pendant un déplacement de l'objet (2), des données de mesure concernant la distance parcourue par le faisceau laser (5) réfléchi et la direction du faisceau laser (5) étant alors générées et la position du réflecteur (3) et de l'objet (2) étant calculée à partir de ces données de mesure, **caractérisé en ce que** des données de mesure supplémentaires concernant l'angle d'incidence (α) du faisceau laser (5) sur le réflecteur (3) sont générées et **en ce que** la position et l'orientation spatiale de l'objet (2) sont calculées à l'aide des données de mesure se rapportant à la direction du faisceau laser (5) et à la distance qu'il a parcourue et à l'aide des données de mesure supplémentaires.

2. Procédé selon la revendication 1, **caractérisé en ce que** les données de mesure supplémentaires concernant l'angle d'incidence (α) du faisceau laser (5) sur le réflecteur (3) sont générées par un capteur de position (12) qui est disposé de façon stationnaire par rapport au réflecteur (3) de telle sorte qu'une partie du faisceau laser (5) non réfléchie sortant par une surface de sortie (11) ou une ouverture de sortie du réflecteur (3) touche le capteur de position et produise sur celui-ci une image dont la position est corrélée à l'angle d'incidence (α).

3. Procédé selon l'une ou l'ensemble des revendications 1 ou 2, **caractérisé en ce que** le réflecteur (3) est stationnaire par rapport à l'objet.

4. Procédé selon l'une ou l'ensemble des revendications 1 ou 2, **caractérisé en ce que** le réflecteur (3) est orientable par rapport à l'objet (2) et **en ce que** des données de mesure supplémentaires concernant l'orientation du réflecteur sont générées.

5. Procédé selon la revendication 4, **caractérisé en ce que** le réflecteur (3) peut pivoter par rapport à l'objet (2) autour d'au moins un axe (x, y) perpendiculaire à un axe optique (z) et **en ce que** des données de mesure supplémentaires concernant l'orientation du réflecteur par rapport à l'objet (2) sont générées par la mesure d'au moins un angle de rotation (β) du réflecteur autour de cet axe (x, y) au nombre d'un au moins.

6. Procédé selon l'une ou l'ensemble des revendications 4 ou 5, **caractérisé en ce que** le réflecteur est orienté approximativement vers le faisceau laser (5) par l'ajustement de son orientation par rapport à l'objet (2) et **en ce que** la position et l'orientation spatiale de l'objet (2) sont calculées à l'aide des données de mesure concernant la direction du faisceau laser (5) et la distance qu'il a parcourue et à l'aide des données de mesure supplémentaires relatives à l'angle d'incidence (α) ainsi qu'à l'orientation du réflecteur par rapport à l'objet (2).

7. Procédé selon l'une ou l'ensemble des revendications 1 à 6, **caractérisé en ce que** les données de mesure concernant la distance parcourue par le faisceau laser (5) sont produites par une mesure interférométrique et les données de mesure concernant la direction du faisceau laser (5) sont produites par une mesure d'angle.

8. Procédé selon l'une ou l'ensemble des revendications 1 à 7, **caractérisé en ce que** les erreurs de mesure dues à la dépendance entre la distance parcourue et/ou la direction du faisceau laser (5) et l'angle d'incidence (α) sont corrigées à l'aide des données de mesure supplémentaires concernant l'angle d'incidence (α).

9. Dispositif pour la mise en oeuvre du procédé selon la revendication 3, comprenant un système de poursuite laser (1) sensiblement stationnaire avec un laser, avec des moyens d'orientation contrôlée d'un faisceau laser (5) produit par le laser, avec des moyens pour la génération de données de mesure concernant la distance parcourue par le faisceau laser (5) réfléchi et des moyens pour la génération de données de mesure concernant la direction du faisceau laser (5),ainsi qu'un réflecteur (3) disposé sur l'objet (2), qui réfléchit parallèlement le faisceau laser (5) du système de poursuite laser (1), **caractérisé en ce que** le réflecteur (3) est disposé sur l'objet de façon orientable par rapport à celui-ci et **en ce que** le dispositif comprend en outre des moyens pour la génération de données de mesure supplémentaires concernant l'angle d'incidence (α) du faisceau laser (5) sur le réflecteur (3) et des moyens de calcul de la position et de l'orientation spatiale de l'objet (2) à l'aide des données de mesure concernant la direction du faisceau laser (5) et la distance parcourue par celui-ci et à l'aide des données de mesure supplémentaires concernant l'angle d'incidence (α).

10. Dispositif pour la mise en oeuvre du procédé selon la revendication 6, comprenant un système de poursuite laser (1) sensiblement stationnaire avec un laser, avec des moyens d'orientation contrôlée d'un faisceau laser (5) produit par le laser, avec des moyens pour la génération de données de mesure concernant la distance parcourue par le faisceau laser (5) réfléchi et des moyens pour la génération de données de mesure concernant la direction du faisceau laser (5),ainsi qu'un réflecteur (3) disposé sur l'objet (2), qui réfléchit parallèlement le faisceau laser (5) du système de poursuite laser (1), **caractérisé en ce que** le réflecteur (3) est disposé sur l'objet (2) de façon orientable par rapport à celui-ci et **en ce que** le dispositif comprend en outre des moyens pour la génération de données de mesure supplémentaires concernant l'angle d'incidence (α) du faisceau laser (5) sur le réflecteur (3), des moyens pour la génération de données de mesure supplémentaires concernant l'orientation réglable du réflecteur (3) par rapport à l'objet (2) et des moyens de calcul de la position et de l'orientation spatiale de l'objet (2) à l'aide des données de mesure concernant la direction du faisceau laser (5) et la distance parcourue par celui-ci et à l'aide des données de mesure supplémentaires.

11. Dispositif selon l'une ou l'ensemble des revendications 9 ou 10, **caractérisé en ce que** le réflecteur (3) est un prisme triple avec une surface de sortie (11) ou un miroir triple avec une ouverture de sortie et **en ce qu'**il est prévu, pour la mesure de l'angle d'incidence (α) et pour la génération des données de mesure correspondantes, un détecteur de position (12) stationnaire par rapport au réflecteur.

12. Dispositif selon l'une ou l'ensemble des revendications 10 ou 11, **caractérisé en ce qu'**il est prévu des capteurs angulaires (20) pour la mesure de l'orientation du réflecteur par rapport à l'objet (2) et pour la génération des données de mesure correspondantes.

13. Dispositif selon l'une ou l'ensemble des revendications 9 à 12, **caractérisé en ce qu'**il comprend en outre des moyens pour la correction des données de mesure concernant la direction du faisceau laser (5) et/ou la distance parcourue par le faisceau laser (5) à l'aide des données de mesure concernant l'angle d'incidence (α) du faisceau laser (5) sur le réflecteur (3).
